# EUROPÄISCHE PATENTSCHRIFT

(11) **EP 0 434 002 B1**
(45) Veröffentlichungstag und Bekanntmachung des Hinweises auf die Patenterteilung: **08.03.1995**
(21) Anmeldenummer: 90124624.9
(22) Anmeldetag: 18.12.1990
(51) Int. Cl.: H02J 9/06

(54) **Schaltungsanordnung zum Aufbau unterbrechungsfreier Stromversorgungseinheiten**
Circuit arrangement for installation of uninterruptable power supplies
Circuit pour installation d'alimentations électriques sans interruption

(30) Priorität: 21.12.1989 DE 3942427
(43) Veröffentlichungstag der Anmeldung: 26.06.1991
(73) Patentinhaber: Siemens Nixdorf Informationssysteme Aktiengesellschaft, 33102 Paderborn (DE)
(72) Erfinder: Rettenmaier, Helmut, Dipl.-Ing., W-8934 Grossaitingen (DE); Busch, Peter, Dipl.-Ing., W-8900 Augsburg (DE)
(74) Vertreter: Fuchs, Franz-Josef, Dr.-Ing.

(56) Entgegenhaltungen:
- DE-A- 1 513 836
- DE-A- 2 462 290
- DE-A- 3 736 372
- FR-A- 2 339 275
- ELEKTRONIK Nr. 4, 1978, MüNCHEN Seiten 102 - 107; J. WÜSTEHUBE:
- 'Gleichspannungswandler für Schaltnetzteile'

## Beschreibung

Die Erfindung betrifft eine Schaltungsanordnung zum Aufbau unterbrechungsfreier Stromversorgungseinheiten mit den Merkmalen des Oberbegriffs des Anspruchs 1.

Zum Aufbau unterbrechungsfreier Stromversorgungseinheiten ist es bekannt, die Netzwechselspannung über einen AC/DC-Wandler zuerst in eine Zwischenkreisgleichspannung umzuformen und daraus dann über einen DC/DC-Wandler die benötigten Ausgangsgleichsspannungen zu erzeugen. Im Störbetrieb, d.h. bei Ausfall der Netzwechselspannung, wird bei einer solchen Stromversorgungseinheit dann anstelle der vom AC/DC-Wandler gebildeten Zwischenkreisgleichspannung eine Batteriespannung in den Zwischenkreis eingespeist, so daß die Ausgangsgleichspannungen des DC/DC-Wandlers erhalten bleiben (DE 34 10 684 A1). Eine andere bekannte Möglichkeit besteht darin, parallel zu einem AC/DC-Wandler, der unmittelbar aus der Netzwechselspannung die benötigten Ausgangsgleichspannungen erzeugt, einen DC/DC-Wandler vorzusehen, der mit Hilfe einer Batteriespannung die benötigten Ausgangsgleichspannungen ein zweites Mal erzeugt. Im Störbetrieb einer so aufgebauten Stromversorgungseinheit werden dann die von dem AC/DC-Wandler erzeugten Ausgangsgleichspannungen durch die von dem DG/DG-Wandler erzeugten Ausgangsgleichspannungen ersetzt (DE 31 18 909 C2). Ferner ist es bekannt, eine Batteriespannung mit Hilfe eines DC/AC-Wandlers zunächst in eine Ersatznetzwechselspannung umzuformen und diese dann bei Ausfall der eigentlichen Netzwechselspannung ersatzweise der Stromversorgungseinheit zuzuführen (DE 32 46 930 A1).

Der Nachteil all dieser Prinzipien ist, daß derart aufgebaute Stromversorgungseinheiten teuer und aufwendig sind. Aus dem Dokument DE-Z: Elektronik 1978, Heft 4, Seiten 102 bis 107, J. Wüstehube: Gleichspannungswandler für Schaltnetzteile", Bild 13 ist der Aufbau eines stromgespeisten Gegentaktwandlers bekannt. Der stromgespeiste Gegentaktwandler weist neben zwei im Gegentakt betriebenen Schaltern einen Netztransformator mit zwei Primärwicklungen und eine dem Netztransformator in Serie vorgeschaltete Drosselspule mit einer Freilaufdiode auf. Für die Ausgangsschaltkreise werden jeweils nur zwei Dioden und ein Glättungskondensator benötigt. Die Ausgangsschaltkreise sind jeweils mit Teilwicklungen einer symmetrisch aufgebauten Sekundärwicklung des Netztransformators verbunden.

Aus dem Dokument FR-A-2 339 275 ist eine nichtunterbrechbare Stromversorgungsquelle bekannt, die zwar keinen Eingangskreis aufweist, der gemäß dem Prinzip eines stromgespeisten Gegentaktdurchflußwandlers sondern lediglich nach dem Prinzip einer herkömmlichen Wechselstromeingangsschaltung arbeitet, die aber einen gegengetakteten zusätzlichen Schaltkreis aufweist, für einen Störbetrieb, in der gekoppelte Drosseln verwendet sind. Dieser zusätzliche Schaltkreis ist sowohl im Normalbetrieb als auch im Störbetrieb in Arbeit. Im Störbetrieb sind lediglich zwei gesteuerte Schalter anders getaktet. Im Normalbetrieb schließen und öffnen sie jeweils gleichzeitig. Im Störbetrieb schließen sie gleichzeitig, öffnen aber zu unterschiedlichen Zeiten. Beim Schließen wird der Transformator kurzgeschlossen und Energie wird in einer der gekoppelten Drosseln gespeichert. Es wird keine Energie zum Sekundärkreis übertragen. Energie wird erst zum Sekundärkreis übertragen, wenn einer der gesteuerten Schalter öffnet. Damit arbeitet der zusätzliche Schaltkreis aber nicht nach dem Prinzip eines stromgespeisten Gegentaktdurchflußwandlers, bei dem zu jeder Phase der Steuerung von Gegentaktschaltern Energie zum Sekundärkreis übertragen wird, sondern nach dem Prinzip eines Sperrwandlers mit gegengetakteten gesteuerten Schaltern. Nachteilig bei dieser nichtunterbrechbaren Stromversorgungsquelle ist, daß eine Batterie, die für den Störfall benötigt wird, auch im Normalbetrieb in Arbeit ist. Im Normalbetrieb wird ständig Magnetisierungsstrom zum Aufmagnetisieren einer der gekoppelten Drosseln entnommen und anschließend beim Abmagnetisieren der betreffenden Drossel der gleiche Strom wieder zurückgegeben.

Aufgabe der Erfindung ist es, eine Schaltungsanordnung zum Aufbau unterbrechungsfreier Stromversorgungseinheiten anzugeben, durch die der Aufwand zur Bildung unterbrechungsfreier Stromversorgungseinheiten geringer wird als der Aufwand, der benötigt wird, um nach den anfangs beschriebenen Prinzipien aufgebaute Stromversorgungseinheiten zu bilden.

Diese Aufgabe wird bei einer Schaltungsanordnung der eingangs genannten Art erfindungsgemäß durch die kennzeichnenden Merkmale des Anspruchs 1 gelöst. Die Grundlage für die Schaltungsanordnung bildet ein stromgespeister Gegentaktwandler. Der Eingangsschaltkreis wird ausgehend von der gleichgerichteten Netzwechselspannung ein zweites Mal nachgebildet, wobei es für den Anschluß mit dem Netztransformator zwei Möglichkeiten gibt. Die erste Möglichkeit ist, den zweiten Eingangskreis über zweite Primärwicklungen anzuschließen. Die zweite Möglichkeit, die eine vorteilhafte Weiterbildung der Erfindung darstellt, ist, den zweiten Eingangskreis über entsprechende Sekundärwicklungen von den für die Ausgangsschaltkreise ohnehin vorhandenen anzuschliessen. Bei der zweiten Anschlußmöglichkeit entfallen die zweiten Primärwicklungen.

Nachfolgend werden zwei Ausführungsbeispiele der Erfindung anhand der Zeichnung näher erläutert. Dabei zeigen:
- FIG 1: ein Ausführungsbeispiel der erfindungsgemäßen Schaltungsanordnung und
- FIG 2: eine verbesserte Ausführungsform der Schaltungsanordnung nach FIG 1.

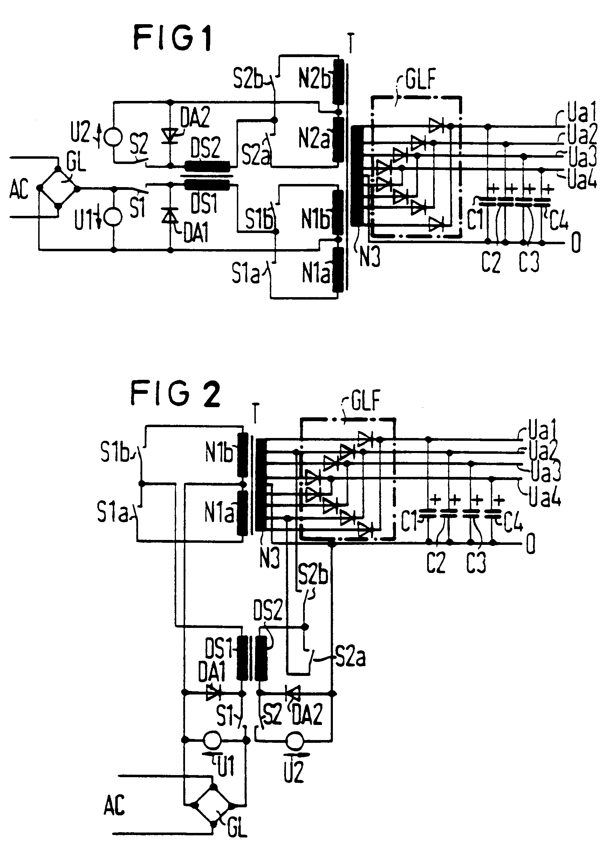

FIG 1 zeigt eine Stromversorgungseinheit, die auf einem nach dem Prinzip eines stromgespeisten Gegentaktwandlers arbeitenden Schaltnetzteil basiert. Eingangsseitig wird dem Schaltnetzteil eine Netzwechselspannung AG zugeführt, die über einen Gleichrichter GL in die Eingangsgleichspannung U1 umgewandelt wird. Die Eingangsgleichspannung U1 wird, ausgehend von einer Seite des Gleichrichters GL, über einen in Serie geschalteten gesteuerten Schalter S1 und eine weiter in Serie angeschlossene Drosselspule DS1 an den Mittelabgriff zweier weiterer, zueinander in Serie geschalteter gesteuerter Schalter S1a und S1b angelegt, die ihrerseits parallel zu zwei zueinander in Serie geschalteten Primärwicklungen N1a und N1b eines Netztransformators T angeordnet sind. Der Mittelabgriff der beiden zueinander in Serie geschalteten Primärwicklungen N1a und N1b ist dabei direkt mit der anderen Seite des Gleichrichters GL verbunden. Eine Diode DA1 ist so angeschlossen, daß sie bei geschlossenem Schalter S1 in Sperrichtung gepolt parallel zur Eingangsgleichspannung U1 liegt. Der Netztransformator T weist auf seiner Sekundärseite eine zu einem Mittelabgriff symmetrisch aufgebaute Sekundärwicklung N3 mit mehreren, paarweise zusammengehörenden Teilabgriffen für jeweils eine Ausgangsspannung auf. Jeweils die beiden zum Mittelabgriff symmetrischen Enden einer Teilwicklung sind über jeweils eine Diode zusammengeschaltet und auf jeweils einen von gemäß dem Ausführungsbeispiel vier Ausgängen der Schaltungsanordnung geführt. Die betreffenden Dioden sind in dem Gleichrichterfeld GLF zusammengefaßt. Zwischen dem jeweiligen Ausgang des Schaltnetzteils und dem Mittelabgriff der Sekundärwicklung N3 ist jeweils einer von vier Ausgangskondensatoren C1 bis C4 geschaltet. An den Ausgängen des Schaltnetzteils können die Ausgangsgleichspannungen Ua1 bis Ua4 abgegriffen werden.

Der Netztransformator T dient unter anderem als Netztrenneinrichtung. Gemäß einer ersten Ausführungsform weist der Netztransformator T zwei weitere Primärwicklungen N2a und N2b auf, die über gesteuerte Schalter S2, S2a und S2b sowie eine vorgeschaltete Drosselspule DS2 mit einer Gleichspannungsquelle U2 verbunden sind. Die Verbindung ist dabei derart, daß die im Normalbetrieb der Stromversorgungseinheit, also bei Vorhandensein der regulären Netzwechselspannung AC, von der Primär- auf die Sekundärseite des Netztransformators T ausgehende Wirkung im Störbetrieb, d.h. bei Ausfall der regulären Netzwechselspannung AC, von den weiteren Primärwicklungen N2a und N2b ausgeht. Die Ansteuerung der Schalter S2a und S2b entspricht dabei der der gesteuerten Schalter S1a und S1b bezüglich des regulären Primärkreises. Insgesamt wird der reguläre Primärkreis durch die zusätzlichen Bauelemente ab der Eingangsgleichspannung U1, die im Störbetrieb ersatzweise durch die Gleichspannungsquelle U2 zur Verfügung gestellt wird, nachgebildet. Deshalb ist noch eine zusätzliche Diode DA2 vorgesehen, die die gleiche Funktion wie die Diode DA1 im regulären Primärkreis ausführt. Bei Ausfall der Netzwechselspannung AG wird der reguläre Primärkreis durch den zweiten Primärkreis ersetzt, wodurch die Ausgangsgleichspannungen Ua1 bis Ua4 aufrechterhalten bleiben.

Die Stromversorgungseinheit nach FIG 2 entspricht der der FIG 1, mit dem Unterschied, daß an Stelle zusätzlicher Primärwicklungen die auf der Sekundärseite des Netztransformators T für die Ausgangsschaltkreise ohnehin vorhandenen Sekundärwicklungen zur Einspeisung einer entsprechend aufbereiteten Ersatzenergie verwendet werden. Dabei muß die Ersatzenergie in solche Sekundärwicklungen eingespeist werden, die auf Grund ihrer physikalischen Beschaffenheit geeignet sind, die von den anderen Sekundärwicklungen benötigten Energien zu übertragen.

Bei der Stromversorgungseinheit nach FIG 2 wird der durch die Drosselspule DS2 fließende Batteriestrom über die Gegentaktschalter S2a und S2b direkt in entsprechende Teilwicklungen der Sekundärwicklung N3 eingespeist. Gemäß FIG 2 geschieht dies über die zweiten Teilwicklungen, d.h. über diejenigen Teilwicklungen, die für die Erzeugung der zweiten Ausgangsspannung, nämlich Ua2, zuständig sind. Die Ausgangsgleichspannungen Ua1 bis Ua4 werden induktiv über den Netztransformator T im jeweils richtigen Teilerverhältnis der einzelnen sekundärseitigen Teilwicklungen zueinander erzeugt. Die Polarität der Gleichspannungsquelle U2 und der Diode DA2 könnte dabei auch umgekehrt gewählt sein.

## Patentansprüche

1. Schaltungsanordnung zum Aufbau unterbrechungsfreier Stromversorgungseinheiten, bestehend aus einem nach dem stromgespeisten Gegentaktdurchflußwandlerprinzip arbeitenden Schaltnetzteil mit einem ersten Eingangskreis, dem im Gegentakt gesteuerte Schalter (S1a,S1b), ein Netztransformator (T) als Netztrenneinrichtung und eine dem Netztransformator in Serie vorgeschaltete erste Drosselspule (DS1) zugeordnet sind, die in Richtung einer Netzwechselspannung mit einem in Serie geschalteten gesteuerten Schalter (S1) und einer in Sperrichtung gepolten Diode (DA1) verbunden ist, die zueinander in Serie geschaltet parallel an eine von der Netzwechselspannung gespeiste Gleichspannungsquelle (U1) angeschlossen sind,
**dadurch gekennzeichnet**,
daß ein zweiter Eingangskreis vorgesehen ist, dem im Gegentakt gesteuerte weitere Schalter (S2a, S2b) und eine dem Netztransformator (T) in Serie vorgeschaltete weitere Drosselspule (DS2) zugeordnet sind, die mit der ersten Drosselspule (DS1) induktiv gekoppelt und weiter mit einem in Serie geschalteten gesteuerten weiteren Schalter (S2) und einer in Sperrichtung gepolten weiteren Diode (DA2) verbunden ist, die zueinander in Serie geschaltet parallel an eine weitere Gleichspannungsquelle (U2) geschaltet sind, und daß die im Gegentakt gesteuerten weiteren Schalter (S2a, S2b) derart mit Wicklungen des Netztransformators (T) verbunden sind, daß die im Normalbetrieb der Stromversorgungseinheit vom ersten Eingangskreis auf die Sekundärseite des Netztransformators (T) ausgeübte Wirkung im Störbetrieb durch den zweiten Eingangskreis ausgeübt wird.

2. Schaltungsanordnung nach Anspruch 1,
**dadurch gekennzeichnet**, daß für die mit der Gleichspannungsquelle (U2) in Verbindung stehenden Wicklungen des Netztransformators (T) zusätzliche Primärwicklungen (N2a, N2b) entsprechend der vorhandenen Primärwicklungen (N1a, N1b) vorgesehen sind.

3. Schaltungsanordnung nach Anspruch 1,
**dadurch gekennzeichnet**, daß für die mit der Gleichspannungsquelle (U2) in Verbindung stehenden Wicklungen des Netztransformators (T) solche von den für die Ausgangsschaltkreise ohnehin vorhandenen Sekundärwicklungen vorgesehen sind, die geeignet sind, bezogen auf die Sekundärseite des Transformators (T) im Störbetrieb die gleiche Wirkung wie die Primärwicklungen im Normalbetrieb hervorzurufen.

## Claims

1. Circuit arrangement for setting up uninterrupted power supply units, comprising a switched-mode power supply, operating in accordance with the current-fed push-pull forward converter principle, having a first input circuit to which are assigned switches (S1a, S1b) controlled in push-pull operation, a mains transformer (T) as mains isolating device, and a first inductor (DS1) which is connected in series upstream from the mains transformer and is connected in the direction of a mains AC voltage to a series-connected controlled switch (S1) and a reversely poled diode (DA1), which, connected in series with each other are connected in parallel to a DC voltage source (U1) which is fed by the mains AC voltage, characterized in that a second input circuit is provided to which are assigned further switches (S2a, S2b) controlled in push-pull operation and a further inductor (DS2) which is connected in series upstream from the . mains transformer (T) and is inductively coupled to the first inductor (DS1) and furthermore to a further series-connected controlled switch (S2) and a further reversely poled diode (DA2), which, connected in series with each other, are connected in parallel to a further DC voltage source (U2), and in that the further switches (S2a, S2b) controlled in push-pull operation are connected to windings of the mains transformer (T) in such a manner that the effect which during normal operation of the power supply unit is exercised by the first input circuit on the secondary side of the mains transformer (T) is exercised during disturbed operation by the second input circuit.

2. Circuit arrangement according to Claim 1, characterized in that additional primary windings (N2a, N2b), corresponding to the present primary windings (N1a, N1b), are provided for the windings of the mains transformer (T) which are connected to the DC voltage source (U2).

3. Circuit arrangement according to Claim 1, characterized in that of the secondary windings which are present in any case for the output circuits those are provided for the windings of the mains transformer (T) which are connected to the DC voltage source (U2), which are suitable to cause the same effect with reference to the secondary side of the transformer (T) during disturbed operation as the primary windings during normal operation.

## Revendications

1. Montage pour la constitution d'unités d'alimentation en courant sans interruption, constitué par un bloc d'alimentation à découpage, qui travaille selon le principe du transducteur à traversée symétrique alimenté en courant, comportant un premier circuit d'entrée auquel sont associés un interrupteur (S1a, S1b), commandé dans la position de phase, un transformateur (T) de raccordement du réseau réalisé en tant que dispositif d'interruption du réseau et une première bobine de self (DS) branchée en série en amont du transformateur de raccordement du réseau, cette bobine de self étant reliée, en direction d'une tension alternative du réseau, à un interrupteur commandé (S1), branché en série, et à une diode (DA1) branchée en inverse, ces deux unités étant branchées entre elles en série et étant raccordées en parallèle à une source de tension continue (41) alimentée par la tension alternative du réseau,
caractérisé par le fait qu'il est prévu un second circuit d'entrée, auquel sont associés d'autres interrupteurs (S2a, S2b) commandés en opposition de phase et une autre bobine de self (DS2) branchée en série en amont du transformateur (T) du raccordement du réseau et qui est accouplée de façon inductive à la première bobine de self (DS1) et est reliée en outre à un autre interrupteur commandé (S2) branché en série, et à une autre diode (DA2) polarisée en inverse, ces deux unités étant branchées en série entre elles et étant raccordées en parallèle avec une autre source de tension continue (U2), et que les autres interrupteurs (S2a, S2b), commandés en opposition de phase, sont reliés à des enroulements du transformateur (T) de raccordement du réseau de telle sorte que l'action, qui est appliquée pendant le fonctionnement normal de l'unité d'alimentation en courant, par le premier circuit d'entrée allant au côté secondaire du transformateur (T) de raccordement du réseau, est appliquée dans le cas d'un fonctionnement perturbé, par le second circuit d'entrée.

2. Montage suivant la revendication 1, caractérisé par le fait que pour les enroulements, qui sont reliés à la source de tension continue (U2), du transformateur (T) de raccordement du réseau, il est prévu des enroulements primaires supplémentaires (N2a, N2b), d'une manière correspondant aux enroulements primaires présents (N1a, N1b).

3. Montage suivant la revendication 1, caractérisé par le fait que pour les enroulements du transformateur (T) de raccordement du réseau, qui sont reliés à la source de tension continue (U2), il est prévu des enroulements secondaires, qui sont présents par ailleurs pour les circuits de sortie et conviennent, en rapport avec le côté secondaire du transformateur (T), pour déclencher, lors du fonctionnement perturbé, la même action que les enroulements primaires lors du fonctionnement normal.
